# EUROPÄISCHE PATENTSCHRIFT

(11) **EP 2 389 757 B1**
(45) Veröffentlichungstag und Bekanntmachung des Hinweises auf die Patenterteilung: **31.07.2013**
(21) Anmeldenummer: 10703799.6
(22) Anmeldetag: 19.01.2010
(51) Int. Cl.: H04N 5/222

(54) **LOKALISIERUNGSSYSTEM ZUR BESTIMMUNG EINER LAGE EINER AUF DEM BODEN BEWEGBAREN VORRICHTUNG**
LOCALIZATION SYSTEM FOR DETERMINING A POSITION OF A DEVICE THAT CAN BE MOVED ON THE FLOOR
SYSTÈME DE LOCALISATION DESTINÉ À LA DÉTERMINATION DE LA POSITION D'UN DISPOSITIF MOBILE SUR LE SOL

(30) Priorität: 20.01.2009 DE 202009000643 U
(43) Veröffentlichungstag der Anmeldung: 30.11.2011
(73) Patentinhaber: Robotics Technology Leaders GmbH, 81249 München (DE)
(72) Erfinder: RIESNER, Stefan, 81247 München (DE)
(74) Vertreter: Wagner, Bernhard Peter
(86) Internationale Anmeldenummer: PCT/EP2010/000279
(87) Internationale Veröffentlichungsnummer: WO 2010/083977

(56) Entgegenhaltungen:
- WO-A1-99/06898
- DE-A1- 10 148 976
- US-B1- 6 377 888

## Beschreibung

Die Erfindung betrifft ein Lokalisierungssystem zur Bestimmung einer Lage einer auf einem Boden bewegbaren Vorrichtung, insbesondere eines verfahrbaren Roboters für Industrieanwendungen oder eines Kameraroboters.

Bei der Produktion von Filmen und Fernsehsendungen werden oft virtuelle Welten eingesetzt, in denen die Protagonisten wie Schauspieler und Nachrichtensprecher eingespielt werden. Diese Technik ist unter anderem als Bluescreen- oder Greenscreen-Technik bekannt. Um bei der Aufnahme mittels einer Studiokamera diese virtuelle Welt später auf das reale Bild entsprechend perspektivisch richtig anzupassen, ist es nötig, die genaue Position des Brennpunkts der Studiokamera sowie deren Blickrichtung, also ihre Orientierung im Raum zu kennen.

Für diesen Zweck werden üblicherweise eine Reihe passiver kodierter Targets in einer Studiobeleuchtungsanlage eingesetzt, die ständig beleuchtet und von einer kleinen, auf der Studiokamera montierten Tracking-Kamera erfasst werden. Jedes Target ist durch einen kreisförmigen Strichcode eindeutig gekennzeichnet, wobei die Verwendung von schmalbandigen LEDs und reflektierendem Material sicherstellt, dass unter normalen Beleuchtungsbedingungen im Studio immer eine ausreichende Anzahl von Targets sichtbar ist. Das Bild der Tracking-Kamera wird verarbeitet, um die exakte Position und Ausrichtung der Studiokamera zu berechnen. Aufgrund der Kenntnis der Position der Targets kann die Position und Orientierung der Studiokamera berechnet werden. Eine kommerzielle Anwendung dieses Positionierungsprinzips ist beispielsweise das Free-D-System der Firma RADAMEC Broadcast Robotics.

In einem weiteren Lokalisierungssystem, welches durch die Firma MGS unter dem Produktnamen blue.i Studio Navigator vertrieben wird, werden Kameras eingesetzt, welche Servoachsen mit Drehgebern besitzen, wobei jederzeit die Stellung der einzelnen Achsen abgefragt und damit die Position der Kamera und ihre Orientierung bestimmt werden kann. Ferner ist die Kamera auf einem Gestell befestigt, das in dem Studio verfahrbar ist, wobei ein speziell gestalteter Boden eingesetzt wird, welcher ein digital kodiertes Muster aufweist, das mittels einer Kamera ausgelesen wird, die an dem Kameragestell montiert ist und über den Boden bewegt wird, wodurch die Position und relative Lage in der Bodenebene des Studios bestimmt werden kann. Um ein präzises Auslesen des Bodenmusters zu gewährleisten, muss jedoch der Boden schmutzfrei gehalten werden.

Darüber hinaus sind Lokalisierungssysteme unter Verwendung von RF-ID-Sendern bekannt, welche in einem Lagerhallenboden für die Orientierung von Transportfahrzeugen oder in einem Teppich für automatische Staubsauger eingebracht sind, wobei das entsprechende Fahrzeug eine RF-ID-Antenne aufweist, um die RF-ID-Sender im Boden zu lokalisieren und entsprechende Fahranweisungen oder Orientierungshilfen zu erhalten. Um die RF-ID-Sender im Boden leicht orten zu können, sind die Antennen der zu lotsenden Fahrzeuge möglichst groß, wodurch jedoch die Präzision der Lokalisierung aufgrund der Größe der eingesetzten Antennen gering ist.

Die US 6,377, 888 B1 beschreibt ein System zur Steuerung einer Bewegung eines Fahrzeugs. Das System umfasst eine Vielzahl von Bodensendeempfängern, welche auf einer Bodenfläche vorgesehen sind und absolute Ortsdaten zur Verfügung stellen. Die Bodensendeempfänger sind in einem rechteckigen Gitter von gleich beabstandeten Reihen und Spalten angeordnet. Zumindest zwei Bodensendeempfängerlesevorrichtungen sind an einem Fahrzeug an dessen Unterseite montiert. Wenn das Fahrzeug sich über die Bodenfläche bewegt, passieren die Bodensendeempfängerlesevorrichtungen die Bodensendeempfänger und lesen die absoluten Ortsdaten von einem entsprechenden Bodensendeempfänger aus, der von einer Bodensendeempfängerlesevorrichtung überstrichen wird. Die absoluten Ortsdaten werden dazu verwendet, die absolute Position des Fahrzeugs zu berechnen. Wenn das Fahrzeug in einer Position ist, so dass zwei Bodensendeempfängerlesevorrichtungen über einen Bodensendeempfänger fahren, dann kann die absolute Orientierung des Fahrzeugs sowohl aus der Kenntnis der Orte der Bodensendeempfänger und der Position der an dem Fahrzeug montierten Bodensendeempfängerlesevorrichtungen berechnet werden. Ferner kann die Fahrzeuggeschwindigkeit und -beschleunigung aus einer Abfolge von absoluten. Positionen abgeleitet werden.

Der Erfindung liegt also die Aufgabe zugrunde, ein weiteres Lokalisierungssystem zur Bestimmung einer Lage einer entlang eines Bodens bewegbaren Vorrichtung zu schaffen, welches eine hohe Positioniergenauigkeit besitzt und gleichzeitig einen geringen Wartungsaufwand erfordert.

Diese Aufgabe wird durch das Lokalisierungssystem nach Anspruch 1 gelöst. Vorteilhafte Ausgestaltungen und Weiterbildungen der Erfindung werden in den Unteransprüchen dargelegt.

Erfindungsgemäß ist ein Lokalisierungssystem zur Bestimmung einer Lage einer auf einem Boden bewegbaren oder verfahrbaren Vorrichtung vorgesehen, mit einem Bodensendeempfängersystem mit einer Vielzahl von Bodensendeempfängern, welche jeweils Bodenantennen zur Markierung von Positionspunkten innerhalb der Bodenebene aufweisen, einem mit der bewegbaren Vorrichtung verbundenen Sendeempfängertablett mit einer Sendeempfangsfläche, die dem Boden gegenüberliegt und dazu geeignet ist, stets die Position von zumindest zwei Bodenantennen innerhalb der Sendeempfangsfläche gleichzeitig zu bestimmen. Hierbei soll unter dem Begriff Lage der bewegbaren Vorrichtung die Position der bewegbaren Vorrichtung sowie ihre Orientierung in der Bodenebene verstanden werden.

Es ist also ein Lokalisierungssystem vorgesehen, bei welchem eine flächige Antennenanordnung eingesetzt wird, die an einer verfahrbaren Vorrichtung montiert und über einem Boden bewegt wird, wobei in der Bodenebene in vorbestimmten Abständen, beispielsweise in einer Wabenanordnung quasipunktförmige Antennen eingebracht sind, die durch die flächige Antennenanordnung lokalisiert werden können. Die flächige Antennenanordnung ist dabei so ausgestaltet, dass sie die Position einer punktförmigen Antenne in der Bodenebene innerhalb ihrer Empfangsfläche sehr genau, also etwa im Millimeterbereich detektieren kann. Die flächige Antennenanordnung ist dabei so ausgestaltet, dass sie gleichzeitig mindestens zwei Bodenantennen detektieren kann, um somit die Position und Orientierung der flächigen Antennenanordnung und somit der verfahrbaren Vorrichtung bestimmen zu können. Hierbei ist es besonders vorteilhaft, wenn die einzelnen Bodenantennen auf der Basis von Induktion arbeiten, wodurch eine externe Stromversorgung der Bodenantennen entfällt.

Für eine reale Ausgestaltung eines Bodensendeempfänger ist es zweckmäßig, wenn ein Bodensendeempfänger eine als Bodenantenne ausgebildete Spule, deren Wicklungsachse im Wesentlichen senkrecht zur Bodenebene liegt, und eine mit der Spule elektrisch verbundene Elektronikplatine umfasst, welche für eine RF-Kommunikation mit dem Sendeempfängertablett ausgebildet ist. Somit kann also die Bodenantenne quasi-punktförmig in der Bodenebene ausgebildet sein, wodurch in besonders geeigneter Weise Positionspunkte innerhalb der Bodenebene markiert werden können.

Um zu gewährleisten, dass die verfahrbare Vorrichtung auch ohne Einstellung ihrer ursprünglichen Startposition sofort ihre Position und Orientierung kennt, ist es zwecksmäßig, wenn die Elektronikplatine dazu geeignet ist, bei der RF-Kommunikation mit dem Sendeempfängertablett eine Positionskennung an dieses zu übertragen.

Für eine einfache Unterbringung der Bodensendeempfänger innerhalb eines Bodens ist es von Vorteil, wenn die Spule eines Bodensendeempfängers einen Durchmesser von kleiner als 5 mm und insbesondere kleiner als 2 mm aufweist. Hierbei können die Bodensendeempfänger, also eine Spule zusammen mit einer Elektronikplatine, in Löcher eingesetzt werden, die direkt in einen bestehenden Boden gebohrt wurden, da eine Verkabelung aufgrund der Stromversorgung durch das Sendeempfängertablett entfällt.

Für eine einfache Installation des Bodensendeempfängersystems oder eine einfache Wartung bei einem Ausfall von Bodensendeempfängern ist es besonders zweckmäßig, wenn das Bodensendeempfängersystem eine Vielzahl von Bodenplatten aufweist, wobei die Spulen der Bodensendeempfänger jeweils so in rückseitigen Sacklöchern der Bodenplatte aufgenommen sind, dass der Abstand zwischen Bodenoberfläche und Spulenende kleiner als 15 mm, vorzugsweise kleiner als 10 mm und insbesondere kleiner als 5 mm ist.

Hierbei ist die Bodenplatte vorteilhafter Weise aus Gipsfasern hergestellt, wobei die Sacklöcher durch Bohren gebildet werden können.

Für den mobilen Einsatz des erfindungsgemäßen Lokalisierungssystems ist es besonders von Vorteil, wenn die Spule eines Bodensendeempfängers als flächige Spule in einem ausrollbaren, flexiblen Boden ausgebildet ist, wodurch der Boden in einfacher Weise transportiert werden kann. Hierbei ist es zweckmäßig, den Durchmesser der Spulen des Bodensendeempfängers im Bereich zwischen 50 mm und 150 mm zu wählen.

Für die Verwirklichung eines präzisen Lokalisierungssystems für eine verfahrbare Vorrichtung, beispielsweise für eine Studiokamera in einem Fernsehstudio ist es zweckmäßig, wenn der mittlere Abstand zwischen der Sendeempfängerfläche des Sendeempfängertabletts und der Bodenebene kleiner als 15 mm, vorzugsweise kleiner als 10 mm und insbesondere kleiner als 5 mm ist.

In einer bevorzugten Ausgestaltung eines Sendeempfängertabletts weist dieses Abstandshalter auf, um die Sendeempfangsfläche des Sendeempfängertabletts in einem vorbestimmten Abstand von der Bodenebene zu halten.

Zweckmäßiger Weise sind hierbei die Abstandhalter aus Kunststoff gefertigt, wobei diese nach einem Verschleiß einfach ausgetauscht werden können.

Für eine einfache Ausgestaltung der Erfindung, welche hinsichtlich der Lokalisierung und Erkennung von Bodenantennen einen möglichst geringen Programmieraufwand benötigt, ist es zweckmäßig, wenn das Sendeempfängertablett aus mehreren Untertabletts zur Detektion jeweils einer Position einer Bodenantenne eines Bodensenderempfängers zusammengesetzt ist, wobei die Bodenantennen der Bodensendeempfänger so in der Bodenebene angeordnet sind, dass in jeder Lage des Sendeempfängertabletts immer eine Bodenantenne im Detektionsbereich eines Untertabletts liegt. Hierbei kann vorteilhafter Weise das Sendeempfängertablett mindestens zwei Untertabletts aufweisen.

Für den Einsatz des erfindungsgemäßen Lokalisierungssystems in einem Filmstudio ist es von Vorteil, wenn die bewegbare Vorrichtung ein verfahrbarer Kameraroboter oder Industrieroboter ist. Hierbei ist es jedoch auch vorstellbar, als bewegbare Vorrichtung ein Kamerastativ vorzusehen.

Der Einsatz des erfindungsgemäßen Lokalisierungssystems bei einem verfahrbaren Industrieroboter oder Kameraroboter hat den besonderen Vorteil, dass bei einem Anfahren einer vorbestimmten Position einer Kamera oder einer Roboterhand ein verfahrbarer Untersatz des Roboters zunächst an eine vorbestimmte Bodenposition durch ein im verfahrbaren Untersatz befindliches Stellsystem gefahren wird, wobei die naturbedingte Ungenauigkeit der angefahrenen Bodenposition aufgrund des Verstellsystems des verfahrbaren Untersatzes in einfacher Weise dadurch ausgeglichen werden kann, dass die Position in der Bodenebene millimetergenau durch das Lokalisierungssystem bestimmt wird und die nicht exakt angefahrene Standposition des verfahrbaren Untersatzes des Industrie- oder Kameraroboters durch die Kamerarobotik, also durch die millimetergenaue Bewegung der Roboterarme ausgeglichen wird. Somit kann durch Kombination von Kamerarobotik und Lokalisierungssystem ein verfahrbarer Roboter geschaffen werden, welcher eine Roboterhand oder eine Filmkamera millimetergenau an eine Position in einem Raum bewegen kann.

Schließlich ist es vorteilhaft, wenn die bewegbare Vorrichtung ein verfahrbares Luftkissensystem mit einem Roboter für den Industrieeinsatz oder einem Kameraroboter ist.

Die Erfindung wird im Folgenden beispielsweise anhand der Zeichnung näher erläutert. Es zeigen:
Figur 1 eine stark vereinfachte schematische Ansicht eines Sendeempfängertabletts gemäß der Erfindung,
Figur 2 eine stark vereinfachte schematische Ansicht eines Sendeempfängertabletts gemäß einem Ausführungsbeispiel der Erfindung,
Figur 3A eine vereinfachte schematische Draufsicht auf eine Oberseite einer Bodenplatte eines erfindungsgemäßen Bodensendeempfängersystems.
Figur 3B eine vereinfachte schematische Draufsicht auf eine Rückseite der Bodenplatte des erfindungsgemäßen Bodensendeempfängersystems, und
Figur 3C eine vereinfachte schematische Schnittansicht entlang einer Linie A-A' in Fig. 3B der Bodenplatte des erfindungsgemäßen Bodensendeempfängersystems.

In den verschiedenen Figuren der Zeichnung sind einander entsprechende Bauelemente mit gleichen Bezugszeichen versehen.

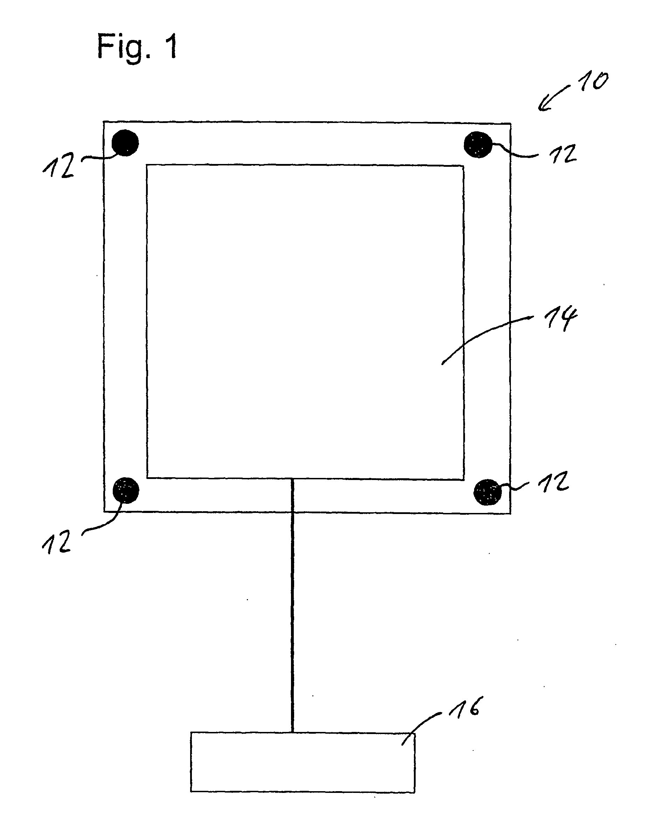

In Figur 1 ist ein Ausführungsbeispiel eines Sendeempfängertabletts 10 des Lokalisierungssystems gemäß der Erfindung gezeigt.

Das Sendeempfängertablett 10 ist dazu vorgesehen, mit einer bewegbaren oder verfahrbaren Vorrichtung verbunden zu werden, wobei die Unterseite (wie in Figur 1 gezeigt) des Sendeempfängertabletts 10 einer Bodenebene gegenüberliegt, in welcher Bodensendeempfänger eingebracht sind, die im Folgenden noch genauer beschrieben werden. Das Sendeempfängertablett kann hierfür Abstandshalter 12 aus Kunststoff aufweisen, um die Unterseite des Sendeempfängertabletts 10 von der Bodenebene oder der Bodenfläche in einem definierten Abstand zu halten. Das Sendeempfängertablett 10 wird also vorzugsweise über eine Bodenebene bewegt, es ist jedoch auch vorstellbar, als Abstandshalter 12 kleine. Kugelrollen vorzusehen. Das Sendeempfängertablett 10 wird so an der verfahrbaren Vorrichtung (nicht gezeigt) angebracht, dass es in Horizontalrichtung frei beweglich ist, um so einen steten Kontakt der Abstandshalter 12 und des Sendeempfängertabletts 10 mit dem Boden zu erreichen. Hierbei ist es jedoch entscheidend, dass die relative Lage des Sendeempfängertabletts 10 in Bezug auf die verfahrbare Vorrichtung innerhalb der Bodenebene fest ist, um somit die Orientierung und Position der verfahrbaren Vorrichtung mittels der Position und Orientierung des Sendeempfängertabletts 10 genau bestimmen zu können. Als verfahrbare Vorrichtung wird vorzugsweise ein Kameraroboter eingesetzt, welcher auf einem mittels Rollen verfahrbaren Kameragestell sitzt, es ist jedoch auch vorstellbar, den Kameraroboter auf einer verfahrbaren Luftkissenplattform zu positionieren.

Das Sendeempfängertablett 10 weist an seiner Unterseite eine Sendeempfangsfläche 14 auf, die in einem vorbestimmten Abstand der Bodenebene gegenüberliegt, und welche dazu geeignet ist, die Position von zumindest zwei Bodenantennen zu bestimmen. Die Sendeempfangsfläche 14 ist mit einer Auswerteelektronik 16 verbunden, um die von der Sendeempfangsfläche 14 empfangenen Signale auszuwerten.

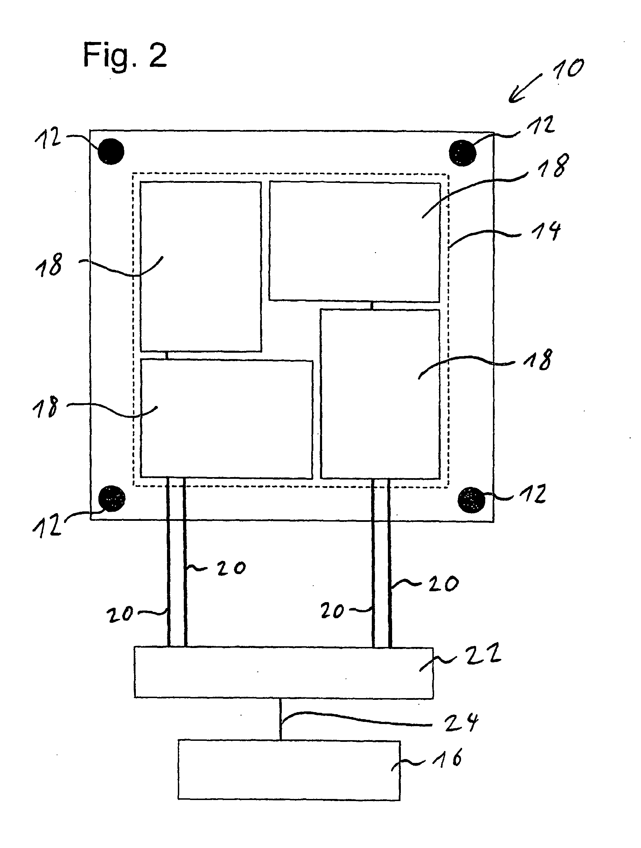

In Figur 2 ist ein Ausführungsbeispiel eines Sendeempfängertabletts 10 des Lokalisierungssystems gemäß der Erfindung gezeigt. Bei diesem Sendeempfängertablett 10 sind innerhalb der Sendeempfangsfläche 14 vier Untertabletts 18 angeordnet, die jeweils Sendeempfangsflächen aufweisen und welche der Bodenfläche oder Bodenebene in einem vorbestimmten Abstand gegenüberliegen. Die Untertabletts 18 sind so ausgestaltet, dass diese die Lage jeweils einer Bodenantenne innerhalb des Tablettbereichs des Untertabletts detektieren können. Die Untertabletts 18 sind über Datenleitungen 20, welche beispielsweise ein USB-Protokoll übertragen, mit einem Datenleitungsknotenpunkt 22 verbunden, welcher als USB-Hub ausgebildet sein kann. Die von dem Datenleitungsknotenpunkt 22 zusammengeführten Datenleitungen 20 werden über eine gemeinsame Datenleitung 24 der Auswerteelektronik 16 zugeführt. Die Untertabletts 18 können neben der Sendeempfangsfläche eine eigene Auswerteelektronik aufweisen, wobei dann über die Datenleitungen 20 bereits die vollständig ausgewertete Position einer Bodenantenne innerhalb der Untertablettebene an die Auswerteelektronik 16 mittels eines USB-Protokolls übermittelt wird. Die Auswerteelektronik 16 kann hierbei ein PC oder eine integrierte Schaltung sein.

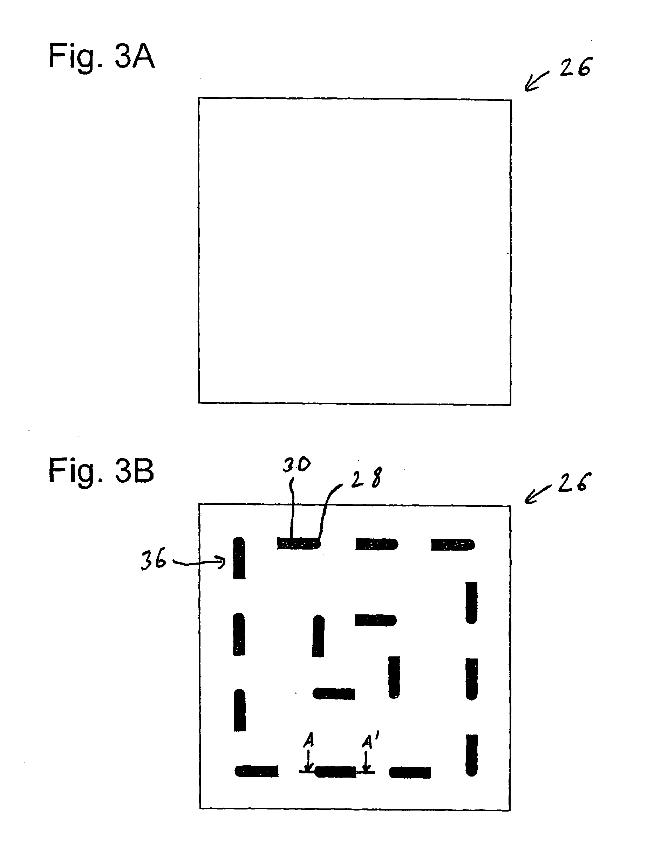

In den Figuren 3A bis 3C ist ein Ausführungsbeispiel einer Bodenplatte 26 eines Bodensendeempfängersystems gemäß der Erfindung gezeigt.

Wie in Figur 3A in der Draufsicht auf die Oberseite der Bodenplatte 26 deutlich wird, weist die Oberfläche der Bodenplatte 26 des Bodensendeempfängersystems keine Veränderungen in der Kontur im Vergleich zu einer normalen Bodenplatte auf, wodurch diese beispielsweise in einem Fernsehstudio mit einer speziellen Farbe beschichtet werden kann, wie dies beispielsweise bei der Green-Screen-Technik üblich ist. Zudem ist das Bodensendeempfängersystem der Erfindung schmutz- und abriebfest und darüber hinaus sehr widerstandsfähig, da sämtliche elektronische Komponenten des Bodensendeempfängersystems vor Feuchtigkeit oder sonstigen Krafteinwirkungen durch die Bodenplatte 26 geschützt sind.

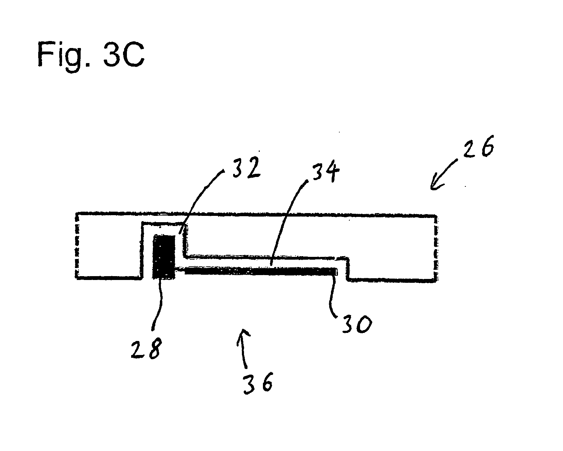

In Figur 3B ist eine Draufsicht auf eine Unterseite der Bodenplatte 26 des Bodensendeempfängersystems der Erfindung gezeigt. Wie aus Figur 3C deutlich wird, welche eine seitliche Schnittansicht entlang einer Linie A-A' in Fig. 3B darstellt, sind in der Rückseite der Bodenplatte 26 als Bodenantennen 28 ausgebildete Spulen angeordnet, die jeweils mit zugehörigen Elektronikplatinen 30 elektrisch verbunden sind. Die Spulen 28 sind in zylinderförmigen Sacklöchern 32 angeordnet, welche bis knapp vor die Oberfläche der Bodenplatte 26 reichen. Die Elektronikplatinen 30 können jeweils in flachen rechteckförmigen Ausnehmungen 34 in der Rückseite der Bodenplatte 26 eingelegt sein, wodurch die aus der Spule 28 und Elektronikplatine 30 gebildeten Bodensendeempfänger 36 nicht von der Rückseite der Bodenplatte 26 hervorragen.

Die Sacklöcher 32 und die Ausnehmungen 34 können bei der Verwendung von aus Gipsfasern gefertigten Bodenplatten 26 durch Fräsen oder durch Bohren gebildet werden. Die in Fig. 3B und 3C gezeigte Ausführungsform ist jedoch nur ein Beispiel für eine mögliche Anordnung der Elektronikplatine 30 und einer zugehörigen Spule 28, es ist beispielsweise auch möglich, sowohl die Elektronikplatine 30 als auch die Spule 28 in einem Sackloch 32 anzuordnein, wodurch für eine Installation der Bodensendeempfänger 36 lediglich Löcher in die Bodenplatten 26 gebohrt werden müssen. Um den Abstand zwischen den einzelnen Bodensendeempfängern 36 zu erhöhen, kann in einem Ausführungsbeispiel auf Koppelnavigation bzw. Odometrie zurückgegriffen werden. Die durch Koppelnavigation ermittelte Information wird hierbei solange verwendet, wie die Untertabletts 18 innerhalb der Sendeempfangsfläche 14 des Sendeempfängertabletts 10 keine Bodensendeempfänger 36 detektieren können.

Im Folgenden soll nun die Funktionsweise und das Zusammenwirken des Sendeempfängertabletts 10 mit dem Bodensendeempfängersystem, welches aus einer Vielzahl von Bodenplatten 26 zusammengesetzt ist, beschrieben werden.

Für eine Installation des Bodensendeempfängersystems innerhalb eines Raums, welcher beispielsweise ein Fernsehstudio sein kann, werden eine Vielzahl von Bodenplatten 26 verlegt, wobei der Boden des Bodensendeempfängersystems als Hohlbödensystem, wie es allgemein bekannt ist, ausgestaltet sein kann. Der modulare Aufbau des Bodensendeempfängersystems aus pflasterbaren Bodenplatten 26 hat den Vorteil, dass im Falle eines Ausfalls von einzelnen Komponenten des Bodensendeempfängersystems jeweils einzelne Bodenplatten 26 ausgetauscht werden können, ohne dass das komplette Bodensystem ausgetauscht werden muss. Hierbei werden nach einem Austausch der Bodenplatte 26 die entsprechenden Bodenantennen 28 neu eingemessen.

Die Bodensendeempfänger 36 sind in der Bodenplatte 26 so angeordnet, dass die Spulen 28 in regelmäßigen Abständen in der Bodenplatte 26 angeordnet sind, wobei jede Spule oder Bodenantenne 28 einen entsprechenden Positionspunkt innerhalb der Bodenplatte 26 und damit innerhalb der Bodenebene des Bodensendeempfängersystems markiert. Die Bodensendeempfänger 36 sind gemäß der Erfindung als Sender-Empfänger ausgebildet, wobei die Spule 28 als Sendeantenne wie auch als Empfangsantenne zur Aufnahme von Energie arbeitet, wie es auch in der RF-ID-Technik verwendet wird. Die mit der Spule 28 verbundene Elektronikplatine 30 kann hierbei ihre Position innerhalb der Bodenebene an das Sendeempfängertablett 10 übermitteln. Dabei ist es jedoch nicht nötig, dass die Elektronikplatine 30 sämtliche Positionsdaten übermittelt, sondern die Elektronikplatine 30 kann im einfachsten Fall eine eindeutige Bodensendeempfängerkennung an das Sendeempfängertablett 10 übertragen, wobei sämtliche relevante Daten hinsichtlich eines Bodensendeempfängers 36 in den entsprechenden Untertabletts 18 oder in der Auswerteelektronik 16 abgespeichert sind, welche über die eindeutige Bodensendeempfängerkennung abgerufen werden können.

Wie in Figur 3C gezeigt, ist die Spule 28 so in das Sackloch 32 der Bodenplatte 26 eingesetzt, dass die Wicklungsachse der Spule 28 im wesentlichen senkrecht zur Bodenebene der Bodenplatte 26 liegt. Somit kann aufgrund der Abstrahlrichtung und Empfangsrichtung der Spule 28 eine quasi-punktförmige Bodenantenne 28 innerhalb der Bodenebene gebildet werden. Der Durchmesser der Spule 28 ist hierbei etwa 1 mm. Der Spulendurchmesser der Spule 28 kann jedoch auch etwas größer sein, also etwa 5 mm oder 10 mm. Bei der Verwendung von festen Bodenplatten ist es jedoch von Vorteil, wenn der Spulendurchmesser der Spule 28 gering gehalten wird, um in einfacher Weise Löcher in eine Bodenplatte 26 bohren zu können. Die Spule 28 ist zylinderförmig aufgebaut und etwa 20 mm lang, wobei der Abstand des Endes der Spule 28 von der Oberfläche der Bodenplatte 26, welcher in etwa dem Abstand zwischen Oberfläche der Bodenplatte 26 und dem Ende des Sacklochs 32 entspricht, vorzugsweise kleiner 15 mm, besonders bevorzugt kleiner 10 mm und insbesondere kleiner 5 mm ist, um einen möglichst geringen Abstand zwischen Sendeempfängertablett 10 und Spule 28 zu erreichen.

In einer anderen Ausgestaltung der Erfindung, welche nicht gezeigt ist, kann eine Spule eines Bodensendeempfängers jedoch einen wesentlichen größeren Durchmesser aufweisen, also etwa 50 mm bis 150 mm, wobei die Sendeempfangsfläche 14 des Sendeempfängertabletts 10 den Mittelpunkt der Spule entsprechend bestimmt. Hierbei ist das Sendeempfängertablett 10 so ausgestaltet, dass die entsprechend vergrößerte Spule mit der gleichen Präzision hinsichtlich ihrer Mittelpunktslage bestimmt werden kann. Die entsprechend größere Spule kann, da sie entsprechend dünner gefertigt werden kann, in einem PVC-Boden eingebracht sein, wodurch ein ausrollbarer Boden bereitgestellt werden kann.

Im Einsatz des Lokalisierungssystems zur Bestimmung der Lage der entlang der Bodenebene verfahrbaren Vorrichtung gemäß der Erfindung wird das Sendeempfängertablett 10 über die Bodenebene des Bodensendeempfängersystems, welches aus der Vielzahl von Bodenplatten 26 zusammengesetzt ist, bewegt. Die Abstandshalter 12 sind dabei so bemessen, dass die Sendeempfangsflächen der Untertabletts 18 möglichst nicht in Berührung mit der Bodenebene gelangen, um einen Abrieb der Sendeempfangsflächen der Untertabletts 18 oder ein Verkratzen dieser zu vermeiden. Im Übrigen sind jedoch die Abstandshalter 12 so gewählt, dass der Abstand zwischen der Sendeempfangsfläche der Untertabletts 18 von der Oberfläche der Bodenplatten 26 möglichst gering gehalten wird. Der mittlere Abstand zwischen der Sendeempfangsfläche des Sendeempfängertabletts 10 und der Bodenebene ist dabei vorzugsweise kleiner als 15 mm, besonders bevorzugt kleiner als 10 mm und insbesondere kleiner als 5 mm.

Die Sendeempfangsfläche eines Untertabletts 18 ist so ausgestaltet, dass die Position der Spule 28. die im Betrieb des Lokalisierungssystems der Sendeempfangsfläche des Untertabletts 18 gegenüberliegt, innerhalb der Sendeempfangsfläche des Untertabletts 18 lokalisiert werden kann. Für diesen Zweck sind unter der Oberfläche der Sendeempfangsfläche des Untertabletts 18 horizontal und vertikal ausgerichtete Antennen angeordnet, welche zwischen einem Sende- und einem Empfangsmodus wechseln. Diese Vielzahl von horizontal und vertikal ausgerichteten Antennen, welche jeweils als längsgestreckte Induktionsschlaufen ausgebildet sind, sind in zwei Schichten übereinander angeordnet, so dass durch die senkrecht zueinander angeordneten Antennen ein Antennengitter gebildet wird, welches mit einer Auswerteelektronik verbunden ist, um mittels einer Auswertung der empfangenen Sendestärke die Position einer im Empfangsfeld liegenden Spule 28 genau innerhalb der Tablettebene bestimmen zu können. Die entsprechenden Antennen der Sendeempfangsfläche senden ein elektromagnetisches Signal aus, welche einen im Sendebereich liegenden Schwingkreis eines Bodensendeempfängers 36 anregen, der aus der Spule 28 und einem in der Elektronikplatine 30 befindlichen Kondensator gebildet wird. Somit kann über den Schwingkreis ein Bodensendeempfänger 36 mit Energie versorgt werden. Die aktivierte Elektronikplatine 30 gibt dann über die Spule wiederum ein Signal an die der jeweiligen Spule 28 gegenüberliegenden Antennen innerhalb der Sendeempfangsfläche eines Untertabletts 18 aus, wobei bei dieser RF-Kommunikation zwischen einer Antenne innerhalb der Sendeempfangsfläche des Untertabletts 18 und der Spule 28 auch eine Positionskennung oder Bodensendeempfängerkennung übermittelt werden kann.

In einer einfachen Ausführungsform der Erfindung, wie sie in Fig. 2 gezeigt ist, ist ein Untertablett 18 dazu geeignet, nur jeweils eine Spule 28 eines Bodensendeempfängers 36 eindeutig lokalisieren zu können. Somit ist es bei dieser Ausführungsform vorteilhaft, wenn die Bodenantennen oder Spulen 28 innerhalb der Bodenebene so angeordnet sind, dass jeweils eine Spule 28 innerhalb einer Sendeempfangsfläche eines Untertabletts 18 befindlich ist. Um die Orientierung und Lage des Sendeempfängertabletts 10 eindeutig bestimmen zu können, sind daher in diesem Ausführungsbeispiel vier Untertabletts 18 innerhalb der Sendeempfangsfläche 14 des Sendeempfängertabletts 10 angeordnet, wobei zusätzlich durch die modulare Anordnung aufgrund des Überlapps der vier Untertabletts 18 in den verschiedenen Richtungen auch innerhalb der Empfangsfläche 14 liegende Totbereiche durch die vier Untertabletts 18 kompensiert werden können. Darüber hinaus kann aufgrund der Verwendung von vier Untertabletts 18 auch ein Ausfall von Untertabletts oder Bodensendeempfängern kompensiert werden.

Als Untertabletts 18 können beispielsweise im Stand der Technik bekannte Grafiktabletts eingesetzt werden, welche eine Auflösungsgenauigkeit von etwa 1 mm besitzen, wodurch ein hochpräzises Lokalisierungssystem für eine verfahrbare Vorrichtung innerhalb eines Raums geschaffen wird.

Bei einem praktischen Einsatz kann das erfindungsgemäße Lokalisierungssystem mit anderen Lokalisierungssystemen verbunden werden, so ist es beispielsweise möglich, den mit Bodensendeempfängern 36 versehenen Boden nur an bestimmten Stellen in einem Raum vorzusehen, an welchen eine präzise Bestimmung der Lage nötig ist, wobei in Zwischenbereichen die Lage über Koppelnavigation bzw. Odometrie bestimmt werden kann. Hierbei kann das erfindungsgemäße Lokalisierungssystem vorteilhafterweise auch dazu verwendet werden, die bei einer Odometrie verwendeten Wegsensoren entsprechend nachzukalibrieren, da in den Bereichen des erfindungsgemäßen Lokalisierungssystems die absolute Bestimmung der Position und Orientierung einer bewegbaren Vorrichtung möglich ist. Somit kann also eine bewegbare Vorrichtung, welche ein Kameraroboter oder ein Industrieroboter sein kann. Zwischenbereiche innerhalb eines Raums mittels Odometrie überbrücken.

Bei einem Einsatz eines Industrieroboters kann dieser mittels eines Stellsystems, welches den Roboter verfährt, in Bereiche gefahren werden, welche mit dem erfindungsgemäßen Lokalisierungssystem ausgestattet sind, wobei innerhalb dieser Bereiche Ungenauigkeiten beim Anfahren einer vorbestimmten Bodenposition in einfacher Weise durch eine Bewegung des Kameraroboterarms ausgeglichen werden können. So kann ein Industrieroboter beispielsweise vor einen Arbeitsbereich gefahren werden, wobei die Genauigkeit des angefahrenen Ortes nicht hoch sein muss. Danach erfolgt eine exakte Bestimmung der Position in der Bodenebene durch das erfindungsgemäße Lokalisierungssystem mit einer Genauigkeit im Millimeterbereich. Diese Information wird an den Industrieroboter mittels einer Steuerungsvorrichtung weitergegeben, wodurch der Industrieroboter seine Hand- oder eine angebrachte Filmkamera millimetergenau an eine vorbestimmte Position im Raum des Arbeitsbereichs fahren kann. Dadurch können Industrieroboter unterschiedliche Tätigkeiten in unterschiedlichen Arbeitsbereichen durchführen und müssen nicht neu eingelernt werden, da sie in jedem Arbeitsbereich die exakte Position ihres Standortes kennen und somit die Roboterhand, welche millimetergenau bewegt werden kann, präzise an eine Position im Raum bewegen können.

Für die Ausgestaltung der bewegbaren Vorrichtung gibt es eine Reihe an Möglichkeiten. So kann die bewegbare Vorrichtung als Transportvorrichtung in einem autonomen Lagerhaltungssystem verwendet werden. Ferner ist es denkbar, die bewegbare Vorrichtung, welche mit einem Sende-Empfänger-Tablett ausgestattet ist, als Transport- oder Arbeitsroboter in einem biochemischen Labor vorzusehen, wodurch ein Robotersystem geschaffen wird, welches gleichzeitig hochpräzise ist und eine hohe Reichweite aufweist, und darüber hinaus in einem hochsterilen Umfeld arbeiten kann. Somit können Arbeiten, welche aufgrund der benötigten Präzision bislang durch Menschen (in Schutzanzügen) durchgeführt werden mussten, durch das erfindungsgemäße Robotersystem durchgeführt werden. Ein weiteres mögliches Einsatzgebiet liegt beispielsweise im Transport von oder der Arbeit mit Gefahrenstoffen, wie beispielsweise radioaktivem Material. Sprengstoffen oder krankheitserregendem biologischen oder chemischen Material.

Eine weitere Anwendung des erfindungsgemäßen Lokalisierungssystems ist beispielsweise der Einsatz von autonomen Fertigungsrobotern. Hierbei ist besonders vorteilhaft, dass aufgrund der berührungsfreien Lokalisierung mittels RF-Kommunikation sowohl das Bodensendeempfängersystem als auch das Sendeempfängertablett verkapselt sein kann, wobei eine Verschmutzung durch Staub. Öl oder sonstigen Schmutz verhindert werden kann, wodurch ein störungsfreier Betrieb ermöglicht wird.

Das erfindungsgemäße Lokalisierungssystem weist eine Vielzahl von Vorteilen gegenüber den bekannten Positioniersystemen auf, die beispielsweise in Fernsehstudios für Kameraroboter eingesetzt werden.

So erreicht das erfindungsgemäße Lokalisierungssystem eine einzigartig hohe Positioniergenauigkeit im Millimeterbereich, welche von RF-ID-Systemen aufgrund der entsprechenden Antennengröße nicht erreicht werden kann. Weiter ist das Lokalisierungssystem der Erfindung sehr widerstandsfähig, da die Bodenplatten 26 schmutz- und abriebfest sind. Dies ist bei optischen Positioniersystemen, die im Stand der Technik bekannt sind, nicht der Fall. Des weiteren ist bei den bekannten Lokalisierungssystemen eine Reparatur fast nur mit einem kompletten Austausch des Bodensystems möglich. Bei dem erfindungsgemäßen System, bei welchem eine Vielzahl von Bodenplatten 26 eingesetzt werden, muss nur eine jeweilige defekte Bodenplatte ausgetauscht und die in der Bodenplatte befindlichen Spulen 28 neu eingemessen werden. Darüber hinaus kann durch das erfindungsgemäße Lokalisierungssystem eine hohe Zeitauflösung von unter 20 ms erreicht werden, was bei den bekannten Systemen aufgrund des hohen Rechenaufwands mittels Bildverarbeitung oft nicht möglich ist. Im Vergleich zu bekannten Systemen ist auch keine Installation an der Decke oder Wänden nötig, wie dies beispielsweise bei optischen Systemen der Fall ist. Somit entfällt der üblicherweise schwierige Vermessungsvorgang der optischen Targets innerhalb eines Raums. Das Bodensendeempfängersystem des Lokalisierungssystems der vorliegenden Erfindung kann darüber hinaus aufgrund seiner unveränderten Oberfläche den entsprechenden Anforderungen angepasst werden, so ist beispielsweise das Auftragen einer bestimmten Farbe oder von bestimmten Bodenmarkierungen weiterhin ohne Rücksicht auf das entsprechende Lokalisierungssystem möglich. Schließlich arbeitet das Lokalisierungssystem berührungslos, wodurch eine Wartung von entsprechenden Bauteilen aufgrund eines Abriebs (abgesehen von den Abstandshaltern 12) entfällt.

## Patentansprüche

1. Lokalisierungssystem zur Bestimmung einer Lage einer auf einem Boden bewegbaren Vorrichtung mit:
- einem Bodensendeempfängersystem mit einer Vielzahl von Bodensendeempfängern (36), welche jeweils Bodenantennen (28) zur Markierung von Positionspunkten innerhalb der Bodenebene aufweisen, und
- einem mit der verfahrbaren Vorrichtung verbundenen Sendeempfängertablett (10) mit einer Sendeempfangsfläche (14), die dem Boden gegenüberliegt, **dadurch gekennzeichnet, dass** die Sendeempfangsfläche (14) dazu geeignet ist, stets die Lage von zumindest zwei Bodenantennen (28) innerhalb der Sendeempfangsfläche (14) gleichzeitig zu bestimmen.

2. Lokalisierungssystem nach Anspruch 1, **dadurch gekennzeichnet, dass** ein Bodensendeempfänger (36) Folgendes umfasst:
- eine als Bodenantenne ausgebildete Spule (28), deren Wicklungsachse im Wesentlichen senkrecht zur Bodenebene liegt, und
- eine mit der Spule (38) elektrisch verbundene Elektronikplatine (30), welche für eine RF-Kommunikation mit dem Sendeempfängertablett (10) ausgebildet ist.

3. Lokalisierungssystem nach Anspruch 2, **dadurch gekennzeichnet, dass** die Elektronikplatine (30) dazu geeignet ist, bei der RF-Kommunikation mit dem Sendeempfängertablett (10) eine Positionskennung an dieses zu übertragen.

4. Lokalisierungssystem nach Anspruch 2 oder 3, **dadurch gekennzeichnet, dass** die Spule (28) eines Bodensendeempfängers (36) einen Durchmesser von kleiner als 5 mm und insbesondere kleiner als 2 mm aufweist.

5. Lokalisierungssystem nach einem der Ansprüche 2 bis 4, **dadurch gekennzeichnet, dass** das Bodensendeempfängersystem eine Vielzahl von Bodenplatten (26) aufweist, wobei die Spulen (28) der Bodensendeempfänger (36) jeweils so in rückseitigen Sacklöchern (32) der Bodenplatte (26) aufgenommen sind, dass der Abstand zwischen Bodenoberfläche und Spulenende kleiner als 15 mm, vor zugsweise kleiner als 10 mm und insbesondere kleiner als 5 mm ist.

6. Lokalisierungssystem nach Anspruch 5, **dadurch gekennzeichnet, dass** die Bodenplatte (26) aus Gipsfasern ist, wobei die Sacklöcher (32) durch Bohren gebildet sind.

7. Lokalisierungssystem nach Anspruch 2 oder 3, **dadurch gekennzeichnet, dass** die Spule (28) eines Bodensendeempfängers (36) als flächige Spule in einem ausrollbaren Boden eingebettet ist.

8. Lokalisierungssystem nach einem der vorstehenden Ansprüche, **dadurch gekennzeichnet, dass** der mittlere Abstand zwischen der Sendeempfängerfläche (14) des Sendeempfängertabletts (10) und der Bodenebene kleiner als 15 mm, vorzugsweise kleiner als 10 mm und insbesondere kleiner als 5 mm ist.

9. Lokalisierungssystem nach einem der vorstehenden Ansprüche, **dadurch gekennzeichnet, dass** das Sendeempfängertablett (10) Abstandshalter (12) aufweist, um die Sendeempfangsfläche (14) des Sendeempfängertabletts (10) in einem vorbestimmten Abstand von der Bodenebene zu halten.

10. Lokalisierungssystem nach Anspruch 9, **dadurch gekennzeichnet, dass** die Abstandshalter (12) aus Kunststoff sind.

11. Lokalisierungssystem nach einem der vorstehenden Ansprüche, **dadurch gekennzeichnet, dass** das Sendeempfängertablett (10) aus mehreren Untertabletts (18) zur Detektion jeweils einer Position einer Bodenantenne (28) eines Bodensenderempfängers (36) zusammengesetzt ist, wobei die Bodenantennen (28) der Bodensendeempfänger (36) so in der Bodenebene angeordnet sind, dass in jeder Lage des Sendeempfängertabletts (10) immer eine Bodenantenne (28) im Detektionsbereich eines Untertabletts (18) liegt.

12. Lokalisierungssystem nach Anspruch 11, **dadurch gekennzeichnet, dass** das Sendeempfängertablett (10) mindestens zwei Untertabletts (18) aufweist.

13. Lokalisierungssystem nach einem der vorstehenden Ansprüche, **dadurch gekennzeichnet, dass** die bewegbare Vorrichtung ein verfahrbarer Kameraroboter, ein Industrieroboter oder ein Kamerastativ ist.

14. Lokalisierungssystem nach einem der Ansprüche 1 bis 12, **dadurch gekennzeichnet, dass** die bewegbare Vorrichtung ein verfahrbares Luftkissensystem mit einem Roboter für den Industrieeinsatz oder mit einem Kameraroboter ist.

## Claims

1. A localization system for determining a state of a device that can move on a floor, comprising:
- a floor transceiver system having a plurality of floor transceivers (36) which each have floor antennas (28) for marking position points within the plane of the floor, and
- a transceiver tablet (10) which is connected to the movable device and has a transmitting/receiving surface (14) which is located opposite the floor **characterized in that** the transmitting/-receiving surface (14) is suitable for continuously determining the position of at least two floor antennas (28) within the transmitting/receiving surface (14) simultaneously.

2. The localization system as claimed in claim 1, **characterized in that** a floor transceiver (36) comprises the following:
- a coil (28) which is embodied as a floor antenna and whose winding axis is located essentially perpendicularly with respect to the plane of the floor, and
- an electronic circuit board (30) which is electrically connected to the coil (38) and is designed for RF communication with the transceiver tablet (10).

3. The localization system as claimed in claim 2, **characterized in that** the electronic circuit board (30) is suitable for transmitting a position identifier to the transceiver tablet (10) during RF communication therewith.

4. The localization system as claimed in claim 2 or 3, **characterized in that** the coil (28) of a floor transceiver (36) has a diameter of less than 5 mm and, in particular, of less than 2 mm.

5. The localization system as claimed in one of claims 2 to 4, **characterized in that** the floor transceiver system has a plurality of floor panels (26), wherein the coils (28) of the floor transceivers (36) are each accommodated in rear-mounted blind holes (32) of the floor panel (26) in such a way that the distance between the surface of the floor and the end of the coil is less than 15 mm, preferably less than 10 mm and, in particular, less than 5 mm.

6. The localization system as claimed in claim 5, **characterized in that** the floor panel (26) is made of gypsum fibers, wherein the blind holes (32) are formed by drilling.

7. The localization system as claimed in claim 2 or 3, **characterized in that** the coil (28) of a floor transceiver (36) is embedded as a planar coil in a floor which can be rolled out.

8. The localization system as claimed in one of the preceding claims, **characterized in that** the average distance between the transmitting/receiving surface (14) of the transceiver tablet (10) and the plane of the floor is less than 15 mm, preferably less than 10 mm and, in particular, less than 5 mm.

9. The localization system as claimed in one of the preceding claims, **characterized in that** the transceiver tablet (10) has spacer elements (12) for keeping the transmitting/receiving surface (14) of the transceiver tablet (10) at a predetermined distance from the plane of the floor.

10. The localization system as claimed in claim 9, **characterized in that** the spacer elements (12) are made of plastic.

11. The localization system as claimed in one of the preceding claims, **characterized in that** the transceiver tablet (10) is composed of a plurality of component tablets (18) for detecting, in each case, one position of a floor antenna (28) of a floor transceiver (36), wherein the floor antennas (28) of the floor transceivers (36) are arranged in the plane of the floor in such a way that, at every position of the transceiver tablet (10), there is always a floor antenna (28) in the detection range of a component tablet (18).

12. The localization system as claimed in claim 11, **characterized in that** the transceiver tablet (10) has at least two component tablets (18).

13. The localization system as claimed in one of the preceding claims, **characterized in that** the movable device is a movable camera robot, an industrial robot or a camera stand.

14. The localization system as claimed in one of claims 1 to 12, **characterized in that** the movable device is a movable air cushion system with a robot for industrial use or with a camera robot.

## Revendications

1. Système de localisation pour déterminer une situation d'un dispositif déplaçable sur un sol, comprenant :
- un système émetteur/récepteur au sol avec une pluralité d'émetteurs/récepteurs de sol (36) qui comprennent chacun des antennes de sol (28) pour marquer des points de position à l'intérieur du plan de sol, et
- une tablette émettrice/réceptrice (10) reliée au dispositif déplaçable, comprenant une surface émettrice/réceptrice (14) qui est située à l'opposé du sol,
**caractérisé en ce que** la surface émettrice/réceptrice (14) est appropriée pour déterminer en permanence simultanément la situation d'au moins deux antennes de sol (28) à l'intérieur de la surface émettrice/réceptrice (14).

2. Système de localisation selon la revendication 1, **caractérisé en ce qu'**un émetteur/récepteur de sol (36) comprend les éléments suivants :
- une bobine (28) réalisée comme antenne de sol, dont l'axe de bobinage est sensiblement perpendiculaire au plan de sol, et
- une platine électronique (30) reliée électriquement à la bobine, qui est réalisée pour une communication à radiofréquences avec la tablette émettrice/réceptrice (10).

3. Système de localisation selon la revendication 2, **caractérisé en ce que** la platine électronique (30) est appropriée pour, lors de la communication à radiofréquences avec la tablette émettrice/réceptrice (10), transmettre à celle-ci un identificateur de position.

4. Système de localisation selon la revendication 2 ou 3, **caractérisé en ce que** la bobine (28) d'un émetteur/récepteur de sol (36) a un diamètre inférieur à 5 mm, et en particulier inférieur à 2 mm.

5. Système de localisation selon l'une des revendications 2 à 4, **caractérisé en ce que** le système émetteur/récepteur au sol comprend une pluralité de plaques de sol (26), et les bobines (28) des émetteurs/récepteurs de sol (36) sont reçues dans des trous borgnes (32) sur le côté postérieur des plaques de sol (26) de telle façon que la distance entre la surface du sol et l'extrémité de la bobine est inférieure à 15 mm, de préférence inférieure à 10 mm, et en particulier inférieure à 5 mm.

6. Système de localisation selon la revendication 5, **caractérisé en ce que** la plaque de sol (26) est formée en plâtre armé de fibres, et les trous borgnes (32) sont formés par perçage.

7. Système de localisation selon la revendication 2 ou 3, **caractérisé en ce que** la bobine (28) d'un émetteur/récepteur de sol (36) est noyée sous forme de bobine plate dans un sol déroulable.

8. Système de localisation selon l'une des revendications précédentes, **caractérisé en ce que** la distance moyenne entre la surface émettrice/réceptrice (14) de la tablette émettrice/réceptrice (10) et le plan du sol est inférieure à 15 mm, de préférence inférieure à 10 mm, et en particulier inférieure à 5 mm.

9. Système de localisation selon l'une des revendications précédentes, **caractérisé en ce que** la tablette émettrice/réceptrice (10) comprend des éléments d'écartement (12) afin de maintenir la surface émettrice/réceptrice (14) de la tablette émettrice/réceptrice (10) à une distance prédéterminée du plan du sol.

10. Système de localisation selon la revendication 9, **caractérisé en ce que** les éléments d'écartement sont en matière plastique.

11. Système de localisation selon l'une des revendications précédentes, **caractérisé en ce que** la tablette émettrice/réceptrice (10) est composée de plusieurs sous-tablettes (18) pour la détection respectivement d'une position d'une antenne de sol (28) d'un émetteur/récepteur de sol (36), et les antennes de sol (28) des émetteurs/récepteurs de sol (36) sont agencées dans le plan du sol de telle façon que dans chaque situation de la tablette émettrice/réceptrice (10) il existe toujours une antenne de sol (28) dans la zone de détection d'une sous-tablette (18).

12. Système de localisation selon la revendication 11, **caractérisé en ce que** la tablette émettrice/réceptrice (10) comprend au moins deux sous-tablettes (18).

13. Système de localisation selon l'une des revendications précédentes, **caractérisé en ce que** le dispositif déplaçable est un automate à caméra déplaçable, un automate industriel ou un trépied de caméra.

14. Système de localisation selon l'une des revendications 1 à 12, **caractérisé en ce que** le dispositif déplaçable est un système déplaçable sur coussin d'air avec un automate pour l'utilisation industrielle ou avec un automate à caméra.
